# EUROPÄISCHE PATENTSCHRIFT

(11) **EP 2 251 668 B1**
(45) Veröffentlichungstag und Bekanntmachung des Hinweises auf die Patenterteilung: **05.12.2018**
(21) Anmeldenummer: 09006487.4
(22) Anmeldetag: 13.05.2009
(51) Int. Cl.: G01N 1/36

(54) **Verfahren zum Positionieren einer organischen, biologischen und/oder medizinischen Probe**
Method for positioning an organic, biological and/or medical sample
Procédé de positionnement d'un échantillon organique, biologique et/ou médical

(43) Veröffentlichungstag der Anmeldung: 17.11.2010
(73) Patentinhaber: ibidi GmbH, 82152 Martinsried (DE)
(72) Erfinder: Zantl, Roman, 85598 Baldham (DE); Horn, Elias, 81377 München (DE)
(74) Vertreter: Grünecker Patent- und Rechtsanwälte PartG mbB

(56) Entgegenhaltungen:
- EP-A- 1 880 764
- WO-A-2005/103685
- DE-A1-102004 041 941
- US-A- 4 689 307
- US-A- 5 939 251

## Beschreibung

Die Erfindung betrifft ein Verfahren zum Positionieren einer organischen, biologischen und/oder medizinischen Probe in einen gewünschten Teilbereich eines Probenträgers. Insbesondere betrifft die Erfindung ein Verfahren zum Positionieren einer Probe unter Zuhilfenahme eines Gels.

Insbesondere in den Bereichen der Zellbiologie und Medizin werden Probenträger zur Untersuchung von organischen, biologischen und/oder medizinischen Proben verwendet. In bestimmten Versuchen ist es dabei von Vorteil, die Proben nur in einem Teil des Volumens des Probenträgers anzuordnen, wobei andere Bereiche des Volumens frei bleiben sollen.

Beispielsweise kann zur Durchführung eines Versuches in einem bestimmten Volumenbereich eine vorherbestimmte, beispielsweise hohe, Probendichte benötigt werden, etwa bei der Simulation von solidem Tumorgewebe. Ebenso ist ein Versuch denkbar, bei dem man unterschiedliche Arten von Proben getrennt voneinander in ein vorherbestimmtes Volumen des Probenträgers einbringt, um beispielsweise deren gegenseitige Beeinflussung zu beobachten.

Aus der US 5,939,251 ist ein Begrenzungsdamm für einen abgedichteten Bereich eines Trägers bekannt.

Aus der WO 2005/103685 ist eine Vorrichtung zur Untersuchung von Biopsieproben bekannt, die eine Platte und eine Abdeckung umfasst, die jeweils in Form eines Gels ausgebildet sind.

Aus der US 4,689,307 ist ein Verfahren zum Immobilisieren einer Probe in einem Gel auf einer Glasfläche bekannt.

Aus der DE 10 2004 041941 ist eine Aufnahmeeinheit für biologische Objekte bekannt, welche ein plattenförmiges Element mit einer Vielzahl von Öffnungen umfasst. Die Öffnungen können ein Aufnahmemedium für biologische Objekte, beispielsweise ein Hydrogel oder eine Flüssigkeit, enthalten.

Aus der EP 1 880 764 ist ein Probenträger zur Untersuchung von Zellwachstum bekannt, umfassend ein Substrat mit einem Reservoir mit einem Boden, wobei das Reservoir bis zu einer vorherbestimmten Höhe der Seitenwand, die kleiner als die Gesamthöhe des Reservoirs ist, mit einem Trägermaterial für Zellwachstum befüllt ist. Das Trägermaterial kann beispielsweise ein Gel sein.

Häufig stellt sich jedoch beim Befüllen eines Probenträgers eine zufällige Anordnung der Probe ein.

Daher ist es Aufgabe der Erfindung, ein Verfahren zum Positionieren einer organischen, biologischen und/oder medizinischen Probe bereitzustellen, welches es erlaubt, die Probe in einen gewünschten Teilbereich des Probenträgers zu positionieren.

Dieses Problem wird gelöst durch ein Verfahren nach Anspruch 1.

Durch die Verwendung eines polymerisierten Gels zur Begrenzung eines gewünschten Teilbereichs, insbesondere eines gewünschten Teilvolumens, in den die Probe positioniert wird, kann eine definierte räumliche Positionierung der Probe erreicht werden.

Die organische, biologische und/oder medizinische Probe entspricht erfindungsgemäß einer Vielzahl von Zellen. Dadurch kann eine gewünschte Zellverteilung und/oder Zelldichte in einem gewünschten Teilbereich des Probenträgers erreicht werden.

Als Gel wird ein viskoelastisches Fluid bezeichnet. Die Fluideigenschaften eines Gels können zwischen der einer idealen Flüssigkeit und der eines idealen Festkörpers liegen. Ein Gel kann eine dreidimensionale räumlich stabile Matrix bilden. Generell kann ein Gel durch Vernetzung mit Crosslinkern und/oder durch Unterschreitung einer Temperatur gelartig werden. Der erste Fall kann als Polymerisieren bezeichnet werden, der zweite Fall als Gelieren.

Das Gel kann eine feste und eine flüssige Phase umfassen, und kann, insbesondere, ein Kolloid sein. Das Gel kann Gelpartikel umfassen, wobei die Gelpartikel während des Polymerisierens oder Gelierens ihre räumliche Ausdehnung ändern, insbesondere vergrößern, können.

Das Gel kann Kollagen 1 Gel, Matrigel, Polyacrylamid, Agarose, Hyaluronsäure und/oder superabsorbierende Materialien, wie z.B. Polyacrylsäure, umfassen oder entsprechen.

Das Gel kann derart ausgebildet sein, dass eine Probe im Gel fixiert oder frei beweglich ist.

Polymerisieren oder Gelieren kann ein Einbringen von Flüssigkeit und/oder Crosslinkern in den Probenträger, insbesondere in das Gel, umfassen.

Der Probenträger umfasst zumindest einen Bereich zum Anordnen einer Probe. Insbesondere ist der Bereich ein dreidimensionaler Raumbereich oder ein dreidimensionales Volumen. Der Bereich umfasst einen gewünschten Teilbereich, insbesondere wobei der gewünschte Teilbereich ein dreidimensionaler Raumbereich oder ein dreidimensionales Volumen ist. Der gewünschte Teilbereich ist in wenigstens einer, insbesondere horizontalen, Richtung kleiner als der Bereich selbst. Der gewünschte Teilbereich kann in allen Richtungen kleiner sein, als der Bereich selbst. Der gewünschte Teilbereich kann in wenigstens einer, insbesondere horizontalen, Richtung nicht durch den Probenträger begrenzt sein. Mit anderen Worten können an den gewünschten Teilbereich weitere Teilbereiche angrenzen.

Der Probenträger kann einen Kunststoff, insbesondere COC (Cyclo-olefin Copolymer), COP (Cyclo-olefin Polymer), PS (Polystyrol), PC (Polycarbonat) oder PMMA (Polymethylmethacrylat), umfassen. Der Probenträger kann als Spritzgussteil ausgebildet sein. Der Probenträger kann eine Bodenplatte umfassen, insbesondere wobei der Probenträger im Betrieb auf der Bodenplatte aufliegt, und wobei die Bodenplatte einen Kunststoff und/oder Glas umfassen kann. Die Bodenplatte kann dünn sein, beispielsweise zwischen 1µm und 300 µm. Dadurch kann hochauflösende Mikroskopie durch die Bodenplatte ermöglicht werden.

Der Probenträger kann eine Deckplatte umfassen, wobei die Deckplatte mit der Bodenplatte flüssigkeitsdicht, insbesondere unmittelbar, verbunden ist.

Der Probenträger, die Bodenplatte und/oder Deckplatte können eine vorherbestimmte Eigenfluoreszenz, die insbesondere kleiner oder gleich der Eigenfluoreszenz von COC oder COP oder eines herkömmlichen Deckglases ist, und/oder einen vorherbestimmten Brechungsindex, insbesondere > 1,2 und/oder < 1,7, aufweisen. Insbesondere kann die Eigenfluoreszenz kleiner oder gleich der Eigenfluoreszenz eines herkömmlichen Deckglases (beispielsweise reinweißes Glas der hydrolytischen Klasse 1 (wie Menzel-Deckglas, insbesondere mit der Stärke Nr. 1,5) sein. Der vorherbestimmte Brechungsindex kann insbesondere > 1,2 und/oder < 1,7, sein. Mit einem derart optisch hochwertigen Material lassen sich in vorteilhafter Weise Mikroskopieuntersuchungen durchführen. Beispielsweise kann die Doppelbrechung so gering sein, dass DIC (Differential Interference Contrast) möglich ist. Eine geringe Eigenfluoreszenz erlaubt die Durchführung von Fluoreszenzmessungen.

Insbesondere kann die Bodenplatte und/oder Deckplatte in einem für Mikroskopie verwendeten Frequenzbereich der elektromagnetischen Strahlung entspiegelt sein. Dadurch kann die Transmission durch die Bodenplatte und/oder Deckplatte erhöht werden, sodass Einzelmolekülmessungen mit Hilfe von Fluoreszenz möglich sind.

Der Probenträger kann einen Hohlraum zum Aufnehmen einer Probe umfassen. In den Hohlraum kann wenigstens eine Öffnung zum Befüllen und/oder Entleeren des Hohlraums mit der Probe und/oder einer Flüssigkeit führen. Der Hohlraum kann durch Aussparungen in der Deckplatte und/oder in der Bodenplatte gebildet werden.

Der Probenträger kann so dimensioniert sein, dass das Volumen des Hohlraums in dem Bereich von 5 µl bis 1000 µl, insbesondere zwischen 100 µl und 500 µl, liegt. Damit ist der Probenträger für Mikrofluiduntersuchungen verwendbar.

Insbesondere kann der Probenträger eine Bodenplatte und eine Deckplatte umfassen, wobei die Deckplatte und/oder die Bodenplatte Aussparungen aufweisen und flüssigkeitsdicht miteinander verbunden sind, so dass die Aussparungen mindestens zwei Reservoire und einen Kanal, der die Reservoire verbindet, bilden. Jedes der Reservoire kann durch eine Öffnung durch die Deckplatte oder Bodenplatte befüllbar sein und die Querschnittsfläche des Kanals an der Mündung der Kanals in eines der Reservoire kann mindestens 5mal, insbesondere mindestens 20mal, kleiner sein als die maximale Querschnittsfläche des Reservoirs parallel zu dieser Querschnittsfläche des Kanals ist. Der Kanal kann über wenigstens eine Öffnung befüllbar sein, insbesondere wobei die wenigstens eine Öffnung einer Mündung eines Befüllkanals entspricht.

Das polymerisierte Gel kann derart angeordnet und/oder ausgebildet sein, dass, insbesondere während des Einbringens der Probe in den Probenträger, ein Ausbreiten der Probe innerhalb des Probenträgers aus dem gewünschten Teilbereich, insbesondere in horizontaler Richtung, verhindert wird. Dadurch kann eine Positionierung der Probe in den gewünschten Teilbereich erreicht werden.

Insbesondere kann das polymerisierte Gel derart ausgebildet sein, dass die Probe nicht in das polymerisierte Gel eindringen kann. Alternativ oder zusätzlich kann das polymerisierte Gel derart angeordnet sein, dass ein Austreten der Probe aus dem gewünschten Teilbereich, insbesondere in andere Teilbereiche des Probenträgers, verhindert wird.

Im gewünschten Teilbereich kann kein polymerisiertes Gel angeordnet sein oder polymerisiertes Gel kann im gewünschten Teilbereich angeordnet sein, insbesondere im gesamten gewünschten Teilbereich. Insbesondere kann nach dem Schritt des Polymerisierens oder Gelierens im gewünschten Teilbereich, insbesondere im gesamten gewünschten Teilbereich, Gel angeordnet sein oder nicht.

Wenn nach dem Schritt des Polymerisierens oder Gelierens kein polymerisiertes Gel im gewünschten Teilbereich angeordnet ist, kann wenigstens eine Grenzfläche oder Außenfläche des gewünschten Teilbereichs das polymerisierte Gel umfassen und dadurch ein Austreten der Probe aus dem gewünschten Teilbereich, insbesondere in einen anderen Teilbereich des Probenträgers, verhindert werden.

Wenn nach dem Schritt des Polymerisierens oder Gelierens polymerisiertes Gel im gewünschten Teilbereich angeordnet ist, insbesondere im gesamten gewünschten Teilbereich, kann die Probe im polymerisierten Gel angeordnet sein, und damit ein Ausbreiten der Probe innerhalb des Probenträgers verhindert werden. Mit anderen Worten, kann der Teilbereich des Probenträgers, in dem das polymerisierte Gel angeordnet ist, dem gewünschten Teilbereich entsprechen.

Insbesondere kann das Einbringen der Probe ein Einbringen der Probe in das Gel umfassen, insbesondere wobei das Einbringen der Probe in das Gel vor dem Anordnen des Gels erfolgt. Gemäß einer erfindungsgemäßen Alternative wird die Probe mit dem Gel in den Probenträger eingebracht. In diesem Fall entspricht der Teilbereich des Probenträgers, in dem das polymerisierte Gel angeordnet ist, dem gewünschten Teilbereich. Insbesondere kann in diesem Fall eine dreidimensionale oder räumliche Anordnung der Probe erreicht werden.

Das erfindungsgemäße Verfahren umfasst in einer Alternative außerdem ein Einbringen eines weiteren Gels in den Probenträger, insbesondere in den gewünschten Teilbereich des Probenträgers. In diesem Fall kann das Gel als erstes Gel und das weitere Gel als zweites Gel bezeichnet werden.

Das weitere Gel kann eines oder mehrere Merkmale des oben beschriebenen Gels aufweisen. Das weitere Gel kann in einem Teilbereich angeordnet werden, welcher an den gewünschten Teilbereich angrenzt. Insbesondere kann das weitere Gel für die Probe durchdringlich oder undurchdringlich sein.

Alternativ oder zusätzlich kann das weitere Gel in den gewünschten Teilbereich eingebracht werden, insbesondere nach dem Polymerisieren oder Gelieren des ersten Gels.

Gemäß einer erfindungsgemäßen Alternative wird die Probe mit dem weiteren Gel in den Probenträger eingebracht, insbesondere in Form einer Suspension in dem weiteren Gel. Dadurch kann eine dreidimensionale oder räumliche Anordnung der Probe erreicht werden.

Es kann eine Probe in das Gel und eine gleiche und/oder unterschiedliche Probe in das weitere Gel eingebracht werden. Dadurch kann eine gegenseitige Beeinflussung von Proben untersucht werden.

Das Einbringen des weiteren Gels kann ein Anordnen des weiteren Gels in einem Teilbereich des Probenträgers, insbesondere im gewünschten Teilbereich des Probenträgers, umfassen.

In das Gel und/oder in das weitere Gel kann ein chemischer Stoff, insbesondere ein Chemoattractant, eingebracht werden. Dadurch kann das Verfahren zur Erzeugung diffusiv aufgebauter Gradienten verwendet werden.

Das Anordnen des Gels umfasst ein Anordnen eines Positionierelements in einem Teilbereich des Probenträgers, insbesondere wobei der Teilbereich den gewünschten Teilbereich umfasst, und wobei das Positionierelement ein Ausbreiten des Gels in den gewünschten Teilbereich oder aus dem gewünschten Teilbereich heraus verhindert. Mit anderen Worten, kann mittels des Positionierelements der Teilbereich des Probenträgers, in dem das Gel angeordnet wird, teilweise oder vollständig abgegrenzt oder ausgespart werden.

Das Anordnen des Gels und/oder das Einbringen des weiteren Gels können ein Anordnen und/oder Einbringen des Gels und/oder des weiteren Gels in das Positionierelement, insbesondere in einen Teilbereich des Positionierelements, umfassen. Insbesondere kann das Anordnen des Gels und/oder des weiteren Gels ein Anordnen des Positionierelements im Probenträger umfassen, insbesondere wobei das Anordnen des Positionierelements nach dem Einbringen des Gels und/oder des weiteren Gels in das Positionierelement, insbesondere in einen Teilbereich des Positionierelements, erfolgt.

Dem Anordnen des Positionierelements im Probenträger kann ein Einbringen des Positionierelements in den Probenträger vorangehen. Das Positionierelement kann in einem Kanal des Probenträgers angeordnet werden, insbesondere wobei der Kanal zwei Reservoire verbindet. Der Kanal kann gegenüber dem Positionierelement abgedichtet werden, insbesondere mit einem Silikonöl und/oder mit einem O-Ring.

Das Positionierelement kann ein oder mehrere Durchgangslöcher umfassen, insbesondere sodass, wenn das Positionierelement mit dem Probenträger, insbesondere mit einer Oberfläche des Probenträgers, verbunden wird, wenigstens ein Sackloch entsteht. Der gewünschte Teilbereich kann dem wenigstens einen Sackloch entsprechen. Der gewünschte Teilbereich kann dem Durchgangsloch entsprechen oder das Durchgangsloch umfassen.

Der gewünschte Teilbereich kann den durch das Positionierelement bedeckten Oberflächenbereich des Probenträgers umfassen. Insbesondere kann eine Grenzfläche des gewünschten Teilbereichs dem durch das Positionierelement bedeckten Oberflächenbereich des Probenträger entsprechen.

Das Material des Positionierelements kann gefrorenes Wasser, ein, insbesondere durch UV Strahlung, depolymerisierbares Polymer, ein Metall und/oder einen Kunststoff umfassen.

Eine Oberfläche des Positionierelements kann derart ausgebildet sein, dass das Positionierelement reversibel mit einer Oberfläche des Probenträgers verbunden werden kann. Insbesondere kann eine Oberfläche des Positionierelements derart ausgebildet sein, dass das Positionierelement zerstörungsfrei und/oder rückstandsfrei von der Oberfläche des Probenträgers entfernt werden kann. Dadurch kann das Positionierelement nach dem Anordnen des Gels, insbesondere nach dem Polymerisieren oder Gelieren des Gels, vom Probenträger entfernt werden, ohne dass die Oberfläche des Probenträgers beschädigt wird.

Das Positionierelement wird nach dem Polymerisieren oder Gelieren des Gels entfernt. Insbesondere wird die Probe gemäß einer erfindungsgemäßen Alternative mit dem Gel eingebracht, wobei ein Positionierelement den gewünschten Teilbereich derart begrenzt, dass ein Ausbreiten des Gels und der Probe aus dem gewünschten Teilbereich heraus verhindert wird. Danach wird das Gel polymerisiert oder geliert und in Folge das Positionierelement entfernt.

Der gewünschte Teilbereich kann vollständig durch das polymerisierte Gel oder durch das polymerisierte Gel und den Probenträger begrenzt werden. Mit anderen Worten kann der gewünschte Teilbereich einem Hohlraum entsprechen, wobei der Hohlraum durch den Probenträger und/oder das polymerisierte Gel gebildet wird. Der Hohlraum kann eine Öffnung umfassen, sodass der Hohlraum mit einer Probe, einem Gel und/oder einer Flüssigkeit befüllt oder entsprechend entleert werden kann. Die Öffnung kann insbesondere einer Mündung eines Befüllkanals entsprechen.

In einem nicht beanspruchten Beispiel können Gelpartikel des Gels, insbesondere des unpolymerisierten Gels, derart ausgebildet sein, dass sie nicht in den gewünschten Teilbereich übertreten können. Insbesondere wenn der gewünschte Teilbereich einem Hohlraum entspricht, können die Gelpartikel einen mittleren Durchmesser und/oder eine mittlere minimale räumliche Ausdehnung aufweisen, welche größer sind, als die maximale räumliche Ausdehnungen oder Längenausdehnung des Hohlraums an der Grenzfläche zum Teilbereich, in dem das Gel angeordnet ist.

Der Probenträger kann in diesem nicht beanspruchten Beispiel einen Hohlraum umfassen, wobei der gewünschte Teilbereich im Hohlraum angeordnet ist. Mit anderen Worten kann der gewünschte Teilbereich einem Teilbereich eines Hohlraums entsprechen. Insbesondere kann der Probenträger zwei Reservoire und einen Kanal, der die Reservoire verbindet, umfassen, wobei der gewünschte Teilbereich dem Kanal entspricht oder der Kanal den gewünschten Teilbereich umfasst.

Der Teilbereich des Probenträgers in dem das Gel angeordnet wird, kann einem Teilbereich des Hohlraums, insbesondere einem Reservoir entsprechen. Das Volumen des Teilbereichs oder Reservoirs kann kleiner, insbesondere 5 % - 10 % kleiner, sein, als das Volumen des polymerisierten oder gelierten Gels. Dadurch, dass das Gel durch die zu geringe Größe des Volumens des Teilbereichs oder Reservoirs nicht vollständig quellen kann, kann in dem Teilbereich oder Reservoir im Gel ein osmotischer Druck entstehen, und ein Austreten der Probe aus dem gewünschten Teilbereich, insbesondere aus dem Kanal in das Reservoir, verhindert werden.

Der Hohlraum, insbesondere die Abmessungen des Hohlraums, können derart ausgebildet sein, dass das Gel durch Kapillarkräfte im gewünschten Teilbereich, insbesondere im Kanal, gehalten wird.

Das polymerisierte Gel kann den gewünschten Teilbereich vertikal begrenzen, insbesondere an dessen Oberseite und/oder Unterseite. Insbesondere kann das polymerisierte Gel einer Grenzschicht zwischen der Probe und einer Oberfläche des Probenträgers entsprechen. Die Grenzschicht kann eine konstante Dicke, insbesondere zwischen 1 µm und 40 µm, aufweisen.

Außerdem offenbart wird eine Verwendung eines Gels zum Positionieren einer organischen, biologischen und/oder medizinischen Probe in einen gewünschten Teilbereich eines Probenträgers, wobei das Gel in einem Teilbereich des Probenträgers angeordnet wird, polymerisiert oder geliert wird, wodurch ein polymerisiertes Gel erhalten wird, wobei das polymerisierte Gel den gewünschten Teilbereich wenigstens teilweise, insbesondere horizontal, begrenzt, und die Probe in den Probenträger, insbesondere in den gewünschten Teilbereich des Probenträgers, eingebracht wird.

Die Verwendung des Gels kann eines oder mehrere der in den oben beschriebenen Verfahren beschriebenen Merkmale aufweisen.

Außerdem offenbart wird eine Verwendung eines Gels zum Einbringen in einen Probenträger, wobei das Gel polymerisiert oder geliert wird und wobei das polymerisierte oder gelierte Gel ein Anhaften einer organischen, biologischen und/oder medizinischen Probe an einer Oberfläche des Probenträgers verhindert. Dadurch kann Durotaxis lebender Zellen verhindert werden.

Die Probe kann in einem weiteren Gel angeordnet sein. Mit anderen Worten kann das polymerisierte Gel eine Zwischenschicht zwischen einem weiteren Gel mit suspensierter Probe und einer Oberfläche des Probenträgers entsprechen. Die Zwischenschicht kann eine konstante Dicke, insbesondere zwischen 1 µm und 40 µm, aufweisen.

Das Gel, das weitere Gel und/oder der Probenträger können eines oder mehrere der oben beschriebenen Merkmale aufweisen. Insbesondere können das Gel und das weitere Gel das Gleiche Material umfassen.

Außerdem offenbart wird ein Probenträger, insbesondere zur Verwendung in einem der oben beschriebenen Verfahren, umfassend ein Gel in einem Teilbereich des Probenträgers.

Das Gel und/oder der Probenträger können eines oder mehrere der oben beschriebenen Merkmale aufweisen.

Insbesondere kann der Probenträger zwei Reservoire und einen Kanal, der die Reservoire verbindet, umfassen, wobei in wenigstens einem Reservoir Gel angeordnet werden kann, sodass, wenn das Gel polymerisiert oder geliert wird, das polymerisierte oder gelierte Gel das wenigstens eine Reservoir vollständig ausfüllt.

Das Gel, insbesondere die Gelpartikel des Gels, können derart ausgebildet sein, dass sie nicht vom wenigstens einen Reservoir in den Kanal übertreten können.

Der Probenträger kann als Mikrofluid-Vorrichtung zur Erzeugung diffusiv aufgebauter Gradienten verwendet werden.

Außerdem offenbart wird ein Positionierelement, insbesondere zur Verwendung in einem der oben beschriebenen Verfahren, wobei das Positionierelement derart ausgebildet ist, dass es ein Ausbreiten des Gels in einen gewünschten Teilbereich oder aus einem gewünschten Teilbereich heraus verhindert.

Insbesondere kann das Positionierelement eines oder mehrere der oben beschriebenen Merkmale aufweisen. Insbesondere kann das Positionierelement ein Durchgangsloch und/oder eine Aussparung aufweisen.

Das Positionierelement kann einen Kunststoff, insbesondere COC (Cyclo-olefin Copolymer), COP (Cyclo-olefin Polymer), PS (Polystyrol), PC (Polycarbonat) oder PMMA (Polymethylmethacrylat), umfassen. Das Positionierelement kann als Spritzgussteil, insbesondere als ein einzelnes Spritzgussteil, ausgebildet sein. Alternativ oder zusätzlich kann das Positionierelement eine Bodenplatte und eine Deckplatte umfassen, wobei die Bodenplatte und/oder die Deckplatte eine Aussparung aufweisen, insbesondere sodass, wenn die Bodenplatte, insbesondere flüssigkeitsdicht und/oder unmittelbar, mit der Deckplatte verbunden wird, ein Durchgangsloch und/oder ein Sackloch im Positionierelement gebildet wird.

Das Positionierelement kann derart dimensioniert sein, dass es in einen Hohlraum, insbesondere in einen Kanal, eines Probenträgers, insbesondere eines oben beschriebenen Probenträgers, eingebracht und/oder angeordnet werden kann.

Der Probenträger kann zwei Reservoire und einen die Reservoire verbindenden Kanal umfassen. In diesem Fall kann ein Durchgangsloch im Positionierelement einen Querschnitt aufweisen, der einem Querschnitt des Kanals senkrecht zur Verbindungslinie der zwei Reservoire, entspricht. Das Durchgangsloch kann in diesem Fall parallel zur Verbindungslinie der zwei Reservoire im Positionierelement verlaufen, wenn das Positionierelement im Probenträger angeordnet ist.

Weitere Merkmale und Vorteile werden nachfolgend anhand der beispielhaften Figuren erläutert. Dabei zeigt
- Figur 1: ein Beispiel eines Probenträgers und eines darin angeordneten Gels;
- Figur 2: ein Beispiel eines Probenträgers und eines darin angeordneten ersten und zweiten Gels;
- Figur 3: ein Beispiel für ein Positionierelement;
- Figur 4: einen Querschnitt durch einen Teil eines beispielhaften Probenträgers umfassend ein Positionierelement und ein Gel;
- Figur 5: einen Querschnitt durch einen Teil eines beispielhaften Probenträgers und ein darauf angeordnetes Gel;
- Figur 6: einen Querschnitt durch einen Teil eines beispielhaften Probenträgers und ein darauf angeordnetes erstes und zweites Gel;
- Figur 7: einen Querschnitt durch einen beispielhaften Probenträger und ein darin angeordnetes Gel;
- Figur 8: einen Querschnitt durch einen beispielhaften Probenträger und ein darin angeordnetes polymerisiertes Gel;
- Figur 9: einen Querschnitt durch einen beispielhaften Probenträger, ein darin angeordnetes polymerisiertes Gel und Proben;
- Figur 10: ein Beispiel eines Probenträgers und eines darin angeordneten polymerisierten Gels;
- Figur 11: einen Querschnitt durch einen beispielhaften Probenträger und ein darin angeordnetes Gel;
- Figur 12: einen Querschnitt durch einen beispielhaften Probenträger und ein darin angeordnetes polymerisiertes Gel;
- Figur 13: einen Querschnitt durch einen beispielhaften Probenträger, ein darin angeordnetes polymerisiertes Gel und Proben;
- Figur 14: einen Querschnitt durch einen beispielhaften Probenträger und ein darin angeordnetes Gel;
- Figur 15: einen Querschnitt durch einen beispielhaften Probenträger und ein darin angeordnetes polymerisiertes Gel;
- Figur 16: einen Querschnitt durch einen beispielhaften Probenträger, ein darin angeordnetes polymerisiertes Gel und Proben;
- Figur 17: einen Teil eines beispielhaften Probenträgers, darauf angeordnetes erstes und zweites Gel und im zweiten Gel angeordnete Proben;
- Figur 18: einen Teil eines beispielhaften Probenträgers umfassend ein Positionierelement;
- Figur 19: einen Teil eines beispielhaften Probenträgers, darauf angeordnetes erstes und zweites Gel und im zweiten Gel angeordnete Proben;
- Figur 20: ein Beispiel eines Probenträgers umfassend zwei Reservoire und einen Kanal;
- Figur 21: ein Beispiel für ein Positionierelement;
- Figur 22: ein Beispiel eines Probenträgers und eines Positionierelements;
- Figur 23: ein Beispiel eines Probenträgers mit eingebrachtem Positionierelement; und
- Figur 24: ein Beispiel eines Probenträgers.

Ein Teilbereich eines Volumens eines Probenträgers kann mit polymerisiertem Gel ausgefüllt werden, und zwar so, dass man andere Teilbereiche nachträglich mit Flüssigkeiten oder Gelen befüllen kann. Beispielsweise kann man das Gel zunächst in der flüssigen, also nicht polymerisierten bzw. gelierten Form, in einem Teilbereich des Probenträgers anordnen und danach polymerisieren bzw. gelieren lassen. Ein oder mehrere zunächst trockene oder nur leicht befeuchtete Gelstücke können in den Teilbereich eingebracht werden, wobei diese aufgrund ihrer Größe nicht in einen oder mehrere angrenzende Teilbereiche übertreten können. Alternativ kann ein Positionierelement, beispielsweise eine entfernbare Barriere, verwendet werden, die man nach dem Polymerisieren entfernt. Als Positionierelement oder Barriere kann gefrorenes Wasser verwendet werden, das man schmelzen lässt, ein Polymer, das man durch, z.B. UV Strahlung, depolymerisieren kann oder auch ein Schieber aus beispielsweise Kunststoff oder Metall.

Alternativ oder zusätzlich kann Gelatine die zu 80%, 90% oder 100% ihrer maximal quellbaren Größe gequollen ist, in eine Gussform eingebracht werden und dort abkühlen, wobei die Gussform derart ausgebildet ist, dass Aussparungen oder Einbuchtungen im gelierten Gel entstehen. Bringt man das Gelstück danach in einen Teilbereich des Probenträgers ein, in den das Gelstück eingepasst ist, die Aussparungen oder Einbuchtungen aber nicht ausgefüllt werden, entstehen kleine Volumina, wie z.B. Kanäle, die danach mit einer Flüssigkeit, z.B. einem nicht polymerisierten Gel, befüllte werden können. Mit anderen Worten, kann der gewünschte Teilbereich durch Aussparungen oder Einbuchtungen im polymerisierten oder gelierten Gel gebildet werden.

Eine weitere Alternative ist, Gel in einen Teilbereich einzufüllen und polymerisieren oder gelieren zu lassen und den angrenzenden Bereich mit einer zweiten Flüssigkeit oder nicht polymerisiertem oder gelierten Gel zu befüllen.

Im Folgenden wird angenommen, dass es sich bei der organischen, biologischen und/oder medizinischen Probe um eine oder mehrere biologische Zellen handelt. Es versteht sich, dass das erfinderische Verfahren nicht darauf beschränkt ist, und dass auch beliebige andere organische, biologische und/oder medizinische Proben möglich sind.

Zur Kultivierung von Zellen in Gelen suspensiert man die Zellen in einem nicht polymerisierten Gel wie z.B. Kollagen 1 Gel, das aus Rattenschwänzen oder aus von Rindern gewonnen werden kann. Andere Gele sind z.B. Matrigel, Polyacrylamid, Agarose oder auch Hyaluronsäure, die mit sogenannten Crosslinkern dazu gebracht werden kann, eine dreidimensionale räumlich stabile Matrix herzustellen. Eine weitere Gruppe stark quellender Gele sind die sogenannten superabsorbierenden Materialien wie z.B. Polyacrylsäure. Superabsorbierende Materialien können mehr als das Hundertfache des eigenen Gewichts an wässriger Flüssigkeit aufnehmen, wobei die tatsächliche Aufnahmefähigkeit unter anderem vom Salzgehalt der Flüssigkeit abhängt.

Bei Migrationsassays mit Zellen kann Kollagen Gel und/oder Matrigel Anwendung finden, da diese aus biologischen Organismen gewonnenen Gele durch zelleigene Enzyme aufgespaltet werden können, so dass sich Zellen durch die Gele einen Weg bahnen können. Dies ist insbesondere nötig, da die Maschenweiten vieler Gele mit ca. 100 nm deutlich kleiner sind als die Zelldurchmesser (ca. 3-20 µm). Möchte man beispielsweise Zellen an einer bestimmten Stelle festhalten, um sie mikroskopisch über längere Zeiträume beobachten zu können, ist es von Vorteil, Gele zu verwenden, für die Zellen im Allgemeinen keine Aufschlüsselungsenzyme besitzen, wie z.B. Polyacrylamid, Agarose oder dreidimensional vernetzte Hyaluronsäure. In diese Gele können die Zellen im Allgemeinen auch nicht einwandern.

Generell kann zwischen Gelen, die durch Vernetzung mit Crosslinkern gelartig werden, und Gelen die z.B. durch Unterschreitung einer Temperatur gelieren, unterschieden werden. Der erste Fall wird im Folgenden als Polymerisieren bezeichnet, der zweite Fall als Gelieren.

Die Gele können sich durch die Formstabilität in der gelartigen Phase unterscheiden. Agarose- und Gelatingele sind beispielsweise schnittfest und halten entsprechend ihre Form. Die Formstabilität von Kollagen 1 Gelen hängt von der Konzentration des Kollagen 1 im Medium ab. Generell weisen sie nicht die Festigkeit von beispielsweise Agarose oder Gelatin auf.

In bestimmten Versuchen ist es von Vorteil, die Zellen nur in einem Teil des Volumens des Probenträgers auszubringen, wobei andere Bereiche nicht mit Zellen besiedelt werden sollen. Beispielsweise kann es sein, dass man zur Durchführung eines Versuches in einem bestimmten Volumenbereich eine bestimmte z.B. hohe Zelldichte benötigt, etwa bei der Simulation von solidem Tumorgewebe. Würde man das gesamte zur Verfügung stehende Volumen des Probenträgers mit Gel mit entsprechend hoher Zelldichte befüllen, könnten die Zellen mit Nährstoffen unterversorgt werden und somit für biologische Versuche unbrauchbar werden.

Ebenso ist ein Versuch denkbar, bei dem man unterschiedliche Typen von Zellen getrennt voneinander in ein gelartiges Volumen einbringen möchte, um z.B. den Einfluss der jeweils anderen Zellkultur auf die Migration der Zellen zu beobachten. Ein weiteres Anwendungsbeispiel sind Kügelchen, die z.B. mit einem Chemoattractant befüllt werden. Diese sollen z.B. in einem schmalen Kanal in einem Kollagen 1 Gel suspensiert werden. Um diesen schmalen Kanal herum sollen Zellen ebenfalls in Kollagen 1 Gel ausgebracht werden, um zu analysieren, ob die Zellen in Richtung des Chemoattractants laufen, der nach und nach von den Kügelchen abgegeben wird, die als punktförmige Quellen dienen.

Ein weiteres Beispiel ist die Beobachtung von Chemotaxis von z.B. Suspensionszellen in drei Dimensionen. Dazu werden Zellen suspensiert in einem dreidimensionalen Gel in einen Beobachtungsbereich eingebracht. An den Bereich können in entgegen gesetzten Richtungen zwei größere Reservoire angrenzen, wobei beide Reservoire das gleiche nährstoffarme Medium enthalten und in einem von den beiden Reservoiren z.B. ein Chemoattractant in geeigneter Konzentration gelöst ist. Dadurch entsteht über den Beobachtungsbereich ein diffusiv aufgebauter Gradient. Um die Migration der Zellen beobachten zu können und den diffusiven Gedienten über ausreichend lange Zeiträume mikroskopieren zu können, gestaltet man den Beobachtungsbereich so, dass dieser nur mit einem kleinen Querschnitt die beiden Reservoire verbindet und nur eine geringe Höhe aufweist. Dadurch wird der Stofftransport durch Diffusion verlangsamt. Verwendet man niedrig auflösende Objektive, z.B. 4x, reicht der Tiefenschärfebereich aus, um die lateralen, zweidimensionalen Positionen parallel zur Fokusebene von Zellen innerhalb des Beobachtungsbereich mit einer einzelnen digitalen Aufnahme zu bestimmen. Alternativ kann man auch Bilderstacks aufnehmen und mittels Bildanalyse zusammensetzen oder z.B. konfokale Aufnahmen machen, oder mit Hilfe von 3D Holographie-Mikroskopie arbeiten, um die Koordinaten der Zellen in drei Dimensionen über die Zeit zu verfolgen.

Bringt man Zellen in Gelen in sehr flache Kanäle ein, kann das Problem auftreten, dass die Zellen aufgrund ihrer höheren Dichte auf den Boden des Probenträgers absinken. Der Boden ist typischerweise aus Glas oder Kunststoff. Sobald die Zellen mit dem Boden in Kontakt sind, heften sich adhärente Zellen, beispielsweise Endothelzellen wie HUVEC oder viele Tumorzelllinien wie HeLa oder HT1080 an der harten Oberfläche an. Dies bezeichnet man als Durotaxis. Möchte man z.B. das Verhalten von Zellen in drei Dimensionen, also in einem weichen Gel, betrachten, ist die Durotaxis ein störender Effekt, da die an Oberflächen adhärierten Zellen im Allgemeinen das gleiche Verhalten wie in einer herkömmlichen zweidimensionalen Zellkultur, z.B. auf einer Kunststoffpetrischalenoberfläche, zeigen.

In diesem Fall ist eine Lösung, dass man die harte Oberfläche mit einem für Zellen nicht penetrierbarem Gel beschichtet, wobei die Gelschicht eine Dicke von mindestens 1 µm bis 40 µm aufweisen sollte, um von der Zelle als weich wahrgenommen zu werden. Dünnere Schichten können auf Zellen etwa so hart wie die beschichtete Oberfläche selbst wirken. Überschichtet man die Gelschicht mit einem weiteren, für Zellen penetrierbaren, Gel in das Zellen beim Einfüllen suspensiert sind, können die Zellen, die auf den Boden absinken, nicht durch Durotaxis an der Oberfläche der unteren anders gearteten Gelschicht adhärieren. Nach dem Polymerisieren oder Gelieren des weiteren Gels können die Zellen im dreidimensionalen Gel beobachtet werden.

Alternativ kann es in bestimmte Fällen auch vorteilhaft sein, dass die untere Gelschicht aus dem gleichen Gel besteht, wie das später darüber zu schichtende weitere Gel, das die Zellsuspension enthält. Absinkende Zellen kommen auf diese Weise nicht mit einem anderen Gel in Berührung, was störende Effekt haben könnte. Andererseits können sie Zellen auch in dieser Konstellation nicht bis auf den Boden absinken und an der harten Gefäßoberfläche adhärieren.

Die Durotaxis ist auch ein störender Effekt in dem Fall, dass man Zellen in einem sehr kleinen Volumen kultivieren möchte. Kugelförmige Tumorzellen mit einem Durchmesser von ca. 10 bis 20 µm, die in einem Gel suspensiert sind, können dünne, röhrenförmige Membranausstülpungen (Nanotubes) ausbilden, die mehrere µm lang sein können. Möchte man solche Zellen in drei Dimensionen betrachten, erkennen die Nanotubes eine harte Oberfläche auch dann, wenn die Zellen die harte Oberfläche noch gar nicht berührt (zumindest so weit man dies mit einem herkömmlichen Lichtmikroskop beurteilen kann).

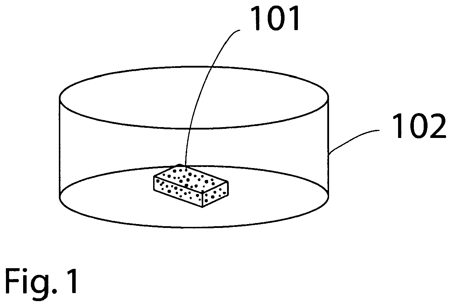

Figur 1 zeigt ein mit Zellen bestücktes Gel 101, beispielsweise aus Kollagen 1, welches in einer Petrischale 102 angeordnet ist. Insbesondere ist das Gel 101 in einem gewünschten Teilbereich der Petrischale 102 angeordnet. In diesem Fall ist der gewünschte Teilbereich vollständig mit, insbesondere polymerisiertem, Gel gefüllt. Das polymerisierte Gel kann ein Ausbreiten der Probe innerhalb der Petrischale 102 verhindern. Die Zellen können im Gel dreidimensional angeordnet sein.

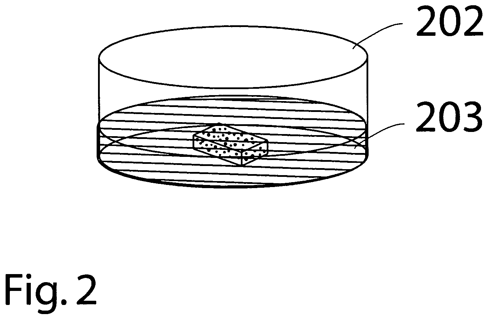

Figur 2 zeigt ein mit Zellen bestücktes Gel in einem gewünschten Teilbereich der Petrischale 202, wobei ein an den gewünschten Teilbereich angrenzender Teilbereich mit einem weiteren Gel 203 aufgefüllt ist. Das weitere Gel 203 kann nicht polymerisiertes oder polymerisiertes Kollagen 1 Gel sein und keine Probe enthalten. Dadurch entsteht in einem großen Gelvolumen ein kleiner mit Zellen befüllter Gelbereich. Alternativ könnte man als weiteres Gel 203 auch ein Gel verwenden, in das die Zellen nicht einwandern können, z.B. Agarose oder Polyacrylamid, um die Zellen im gewünschten Teilbereich gefangen zu halten.

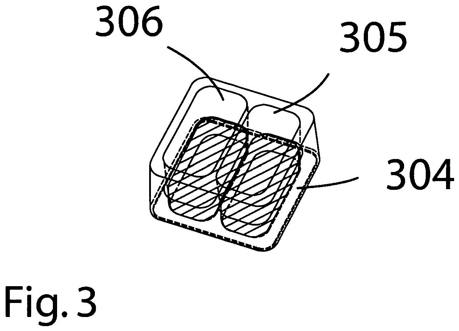

In Figur 3 ist ein Beispiel eines Positionierelements 304 gezeigt. Es entspricht einem "Culture Insert" der Firma ibidi GmbH. Mit Hilfe des Positionierelements 304 kann man zwei voneinander getrennte Zellwachstumsflächen bzw. Wachstumsvolumina herstellen. Verbindet man das Positionierelement mit den Durchgangslöchern 305 und 306 mit einer Oberfläche eines Probenträgers, so können Teilbereiche erzeugt werden, welche mit Zellsuspensionen und/oder Gelen befüllt werden können, in denen Zellen suspensiert sind. Alternativ kann auch ein Gel ohne Zellen verwendet werden. Diese Teilbereich können Sacklöchern entsprechen.

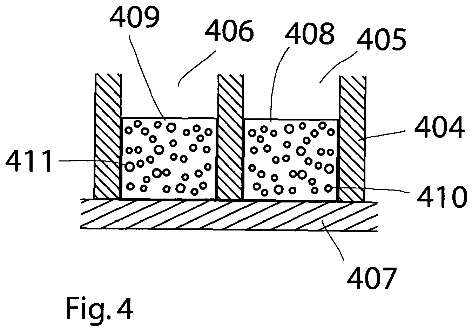

In Figur 4 ist das Positionierelement 404 beispielhaft auf einer Oberfläche eines Mikroskopieträgers 407, der aus Kunststoff oder Glas bestehen kann, aufgebracht. Zwischen Positionierelement 404 und Mikroskopieträger 407 kann keine Flüssigkeit eindringen. In die Teilbereiche 405 und 406 werden die Gele 408 und 409 eingebracht, in denen Zellen 410 und 411 suspensiert sind. Dabei können die Gele 408 und 409 gleich oder unterschiedlich sein, ebenso wie die Zellen 410 und 411 gleich oder unterschiedlich sein können. Beispielsweise können beide Gele 408 und 409 aus Kollagen 1 hergestellt sein, die Zellen 410 können Fibroblasten sein, und die Zellen 411 können HT1080 sein. Es können auch in eines der Gele 408 oder 409 unterschiedliche Zellen eingebracht werden.

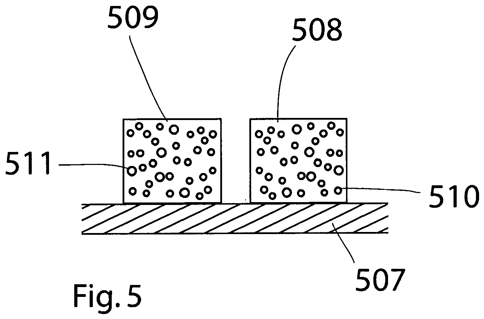

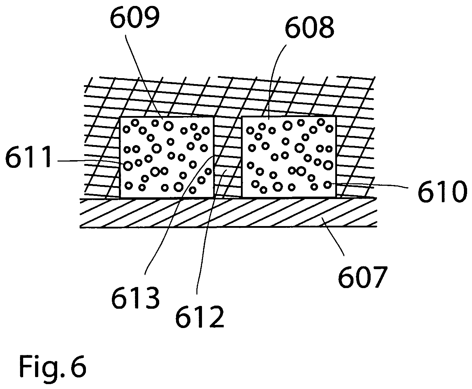

Polymerisiert oder geliert man die Gele und entfernt das Positionierelement 404, wie in Figur 5 gezeigt, bleiben die mit Gel 508 bzw. 509 befüllten Teilbereiche auf dem Mikroskopieträger 507. Im Gel 509 sind Zellen 511 suspensiert und in Gel 508 sind Zellen 510 suspensiert. Befüllt man, wie in Figur 6 gezeigt, den Spalt zwischen den mit Gel 608 bzw. 609 gefüllten Teilbereichen mit einem weiteren Gel 612, das z.B. Kollagen 1 Gel sein kann, kann man, z.B. mit Videomikroskopie oder mit unterschiedlichen Fluoreszenzfärbungen von Fibroblasten und HT1080 Zellen, beobachten, ob und wie beispielsweise die Tumorzellen in den Teilbereich der Bindegewebszellen vordringen oder was als Metastasierungsmodell dienen kann. In einem anderen Versuch kann man als weiteres Gel 612 z.B. ein Gel verwenden, das für die gewählten Zellen 610 und 611 nicht penetrierbar ist, wie z.B. Agarose. Dadurch sind die Zellen 610 und 611 in den Teilbereichen auf dem Träger 607 gefangen. Werden z.B. die Zellen 611 von Substanzen angezogen, die von den Zellen 610 seggregiert werden, kann man dies dadurch beobachten, dass sich die Zellen 611 an der Fläche 613, die dem Teilbereich mit Gel 608 zugewandt ist, anreichern. Es können auch Zellen in das weitere Gel 612 eingebracht werden, insbesondere Zellen, die gleich und/oder unterschiedlich zu den Zellen 610 und/oder 611 sind.

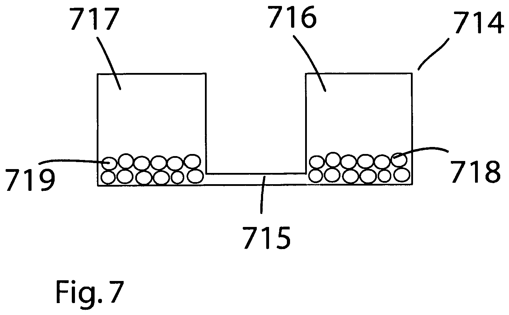

In Figur 7 ist ein Beispiel eines Probenträgers 714 gezeigt, der zur Durchführung von Zellanalysen in chemischen Gradienten verwendet werden kann. Ein Beobachtungsbereich oder Kanal 715 mit einem kleinen Querschnitt und einer geringen Höhe verbindet zwei Reservoire 716 und 717, die unabhängig voneinander befüllt werden können, indem sie je mindesten eine Öffnung (nicht gezeigt) zum Befüllen aufweisen. In die Reservoire 716 und 717 sind Gelpartikel 718 und 719 aus quellbaren Materialien eingebracht, die aufgrund ihrer Größe nicht in den Kanal 715 gelangen können. Als stark quellendes Material kann z.B. ein superabsorbierendes Material wie z.B. Polyacrylsäure verwendet werden oder auch z.B. getrocknete Gelatine Partikel. Das superabsorbierende Material (z.B. super absorbent polymer) und/oder die Gelatine kann als Granulat oder in Form von Plättchen in den Probenträger eingebracht und/oder angeordnet werden.

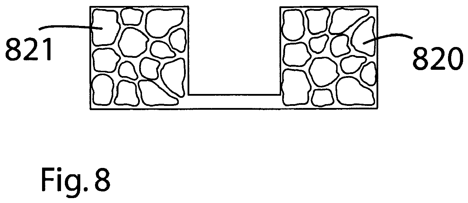

Das Einfüllen der Gelpartikel kann bei der Herstellung des Probenträgers erfolgen. In Figur 8 ist ein Beispiel eines Probenträger gezeigt, wobei die Reservoire mit einer Flüssigkeit gefüllt wurden, so dass die Gelpartikel zu gequollenen Gelpartikeln 820 und 821 gequollen sind, welche die Reservoire vollständig ausfüllen. Die Menge und/oder Art der Gelpartikel kann derart gewählt werden, dass das Volumen der vollständig gequollenen Gelpartikel 820 und 821 etwas größer ist, z.B. 5% bis 10%, als die Volumina der Reservoire. Dadurch, dass das Gel durch die zu geringe Größe des Volumens nicht vollständig quellen kann, kann in den Reservoiren im Gel ein osmotischer Druck entstehen. Dieser kann bewirken, dass man den Beobachtungsbereich oder Kanal durch einen entsprechenden Querkanal mit Zellsuspension füllen kann, die z.B. in einem Gel suspensiert ist, ohne dass Zellen in die Reservoire gelangen.

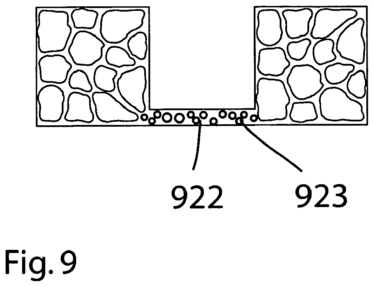

Figur 9 zeigt ein Beispiel eines Probenträgers mit in einem Gel 922 suspensierten Proben 923.

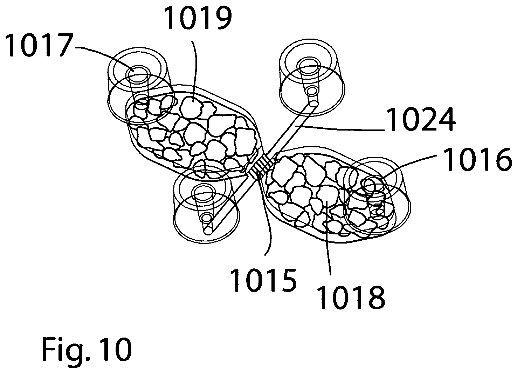

Figur 10 zeigt ein Beispiel eines Probenträgers umfassend zwei Reservoire 1016 und 1017, einen Kanal 1015, in den Reservoiren 1016 und 1017 angeordnete Gelpartikel 1018 und 1019 sowie einen Querkanal 1024 zum Befüllen des Kanals 1015 mit Zellen.

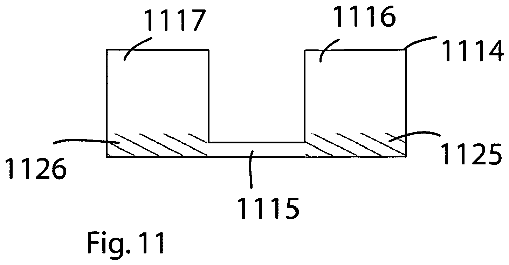

Figur 11 zeigt ein Beispiel eines Probenträgers 1114 umfassend zwei Reservoire 1116 und 1117 und einen Kanal 1115, der die beiden Reservoire 1116 und 1117 verbindet. Als Quellgel werden kleine Plättchen 1125 und 1126 verwendet. Solche Plättchen können z.B. aus Textilien gestanzt werden, in die superabsorbierende Materialien eingearbeitet werden. Ein Beispiel dafür ist Luquafleece® der Firma Bayer. Ein anderes Beispiel für Plättchen 1125 und 1126 können Plättchen aus eingetrockneter Gelatine sein. Dabei muss im Fall der Gelatine darauf geachtet werden, dass man den Probenträger, insbesondere die darin angeordneten Gelatineplättchen, nicht über die Schmelztemperatur der Gelatine erwärmt.

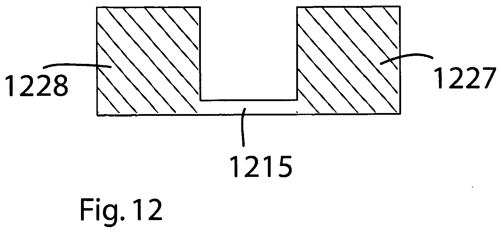

In Figur 12 ist ein Beispiel eines Probenträgers gezeigt, mit gequollenen Plättchen 1227 und 1228, welche die Reservoire vollständig ausfüllen. Insbesondere kann das Volumen der Reservoire kleiner sein, als das der vollständig gequollenen Plättchen 1227 und 1228. Der Beobachtungsbereich oder Kanal 1215 ist nicht zugequollen, da die Polymere formstabil vernetzt sind.

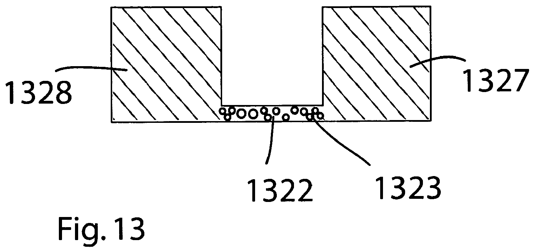

In Figur 13 ist ein Beispiel eines Probenträgers gezeigt, wobei der Beobachtungsbereich oder Kanal mit Gel 1322 mit suspensierten Zellen 1323 befüllt ist. Dazu kann beispielsweise ein wie in Figur 10 gezeigter Befüllungskanal 1024 verwendet werden. Die Reservoire umfassen gequollene Plättchen 1327 und 1328.

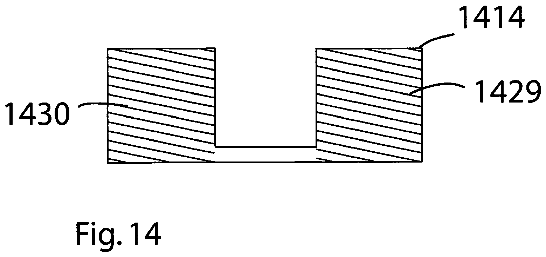

In Figur 14 sind die Volumina von Reservoiren eines beispielhaften Probenträgers 1414 mit lyophilisertem Gel 1429 und 1430 befüllt. Dazu kann man z.B. Kollagen 1 Gel, vernetzte Hyaloronsäure, oder Gelatine verwenden. Durch das Lyophilisieren kann man die Gele 1429 und 1430 schnell rehydrieren.

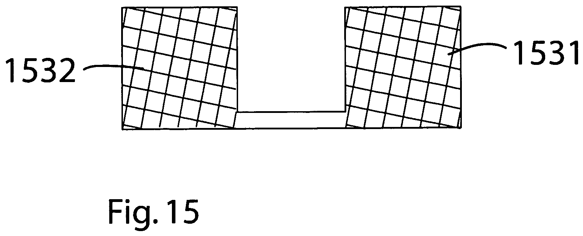

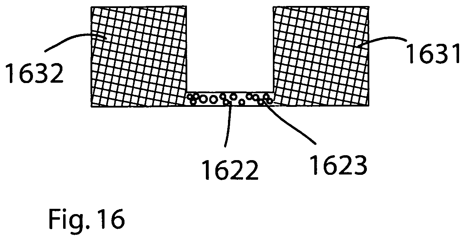

Die rehydrierten Gele 1531 und 1532 sind in den Reservoiren des beispielhaften Probenträgers in Figur 15 gezeigt. In Figur 16 ist zusätzlich zu den rehydrierten Gelen 1631 und 1632 in den Reservoiren eines beispielhaften Probenträgers gezeigt, dass der Beobachtungsbereich oder Kanal mit Gel 1622 gefüllt ist, in dem Zellen 1623 suspensiert sind.

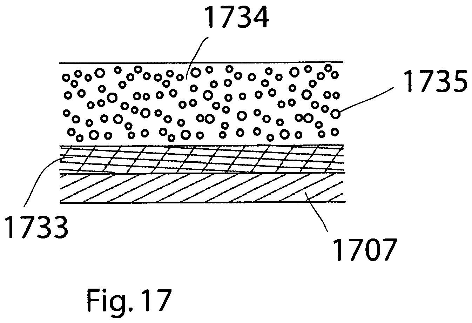

In Figur 17 ist eine Gelschicht 1733 auf einem Teil eines beispielhaften Probenträgers 1707 gezeigt. Nachdem die Schicht 1733 polymerisiert bzw. geliert ist bringt man darauf ein weiteres Gel 1734 auf, in dem Zellen 1735 suspensiert sind. Dadurch kann man verhindern, dass die Zellen 1735 mit einer Oberfläche des Probenträger 1707 in Berührung kommen und durch Durotaxis an der Oberfläche adhärieren.

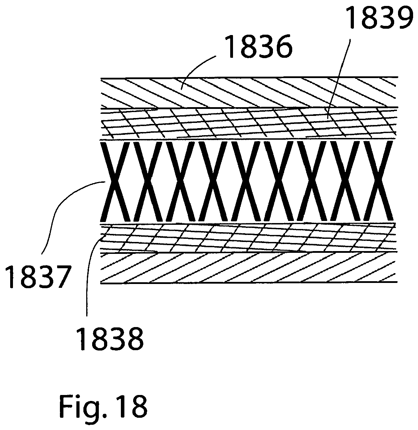

In Figur 18 ist ein Teil eines beispielhaften Probenträgers gezeigt, der von einem Unterteil und einem Oberteil 1836 begrenzt wird. Zwischen Unter- und Oberteil ist ein Positionierelement in Form eines Schiebers 1837 so angeordnet, dass jeweils zwischen Schieber 1837 und Unter- und Oberseite definierte Volumina 1838 und 1839 frei bleiben. Diese werden mit einem Gel befüllt und das Gel auspolymerisiert bzw. geliert. Danach entfernt man den Schieber 1837, wodurch ein gelfreies Volumen oder ein gelfreier Teilbereich übrig bleibt.

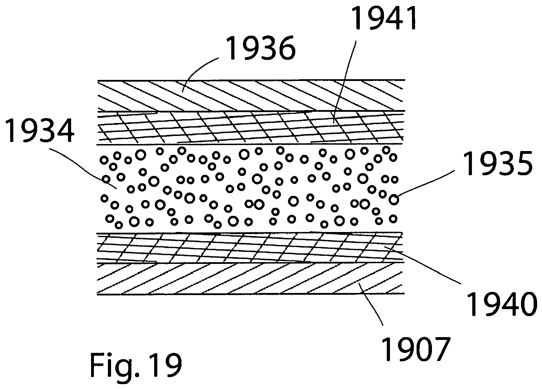

Dieser kann dann wie in Figur 19 gezeigt, mit einem weiteren Gel 1934 befüllt werden, in dem Zellen 1935 suspensiert sind. Dadurch können Zellen 1935 in einem kleinen Volumen kultiviert werden, ohne dass sie eine harte Oberfläche des Probenträgers 1907, beispielsweise auch des Oberteils 1936, bemerken. Zu diesem Zweck kann man als Gel 1940 und 1941 vorzugsweise Gele verwenden, durch die die Zellen nicht penetrieren können.

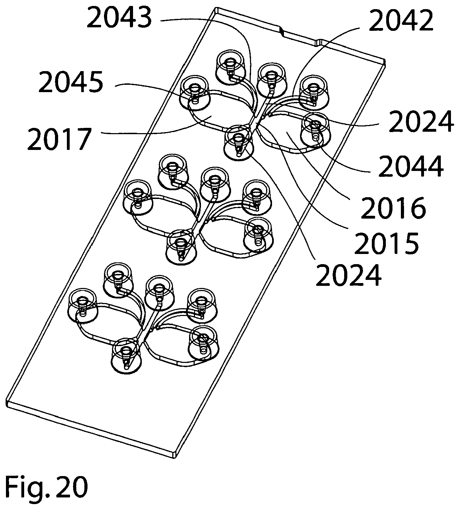

In Figur 20 ist ein beispielhafter Probenträger gezeigt, mit dessen Hilfe Chemotaxis in drei Dimension untersucht werden kann. Dazu befüllt man zunächst einen Beobachtungsbereich oder Kanal 2015 mit Hilfe eines Querkanals 2024 mit einem Gel, in dem Zellen suspensiert sind, und lässt das Gel dort polymerisieren bzw. gelieren. In diesem Fall kann der Kanal derart dimensioniert sein, dass das Gel und die Probe aufgrund von Kapillarkräften im Kanal gehalten werden, d.h. nicht aus dem Kanal austreten. Danach befüllt man ein Reservoir 2016 über einen Kanal 2042, wobei das Reservoir über eine Öffnung 2044 entlüftet wird. Ein zweites Reservoir 2017 befüllt man entsprechend über einen Befüllkanal 2043, als Entlüftung dient eine Öffnung 2045. Wichtig für den Aufbau eines stabilen diffusiven Gradienten ist das hermetische Verschließen aller Anschlüsse durch entsprechende Stecker, wie beispielsweise in EP 1 741 487 beschrieben.

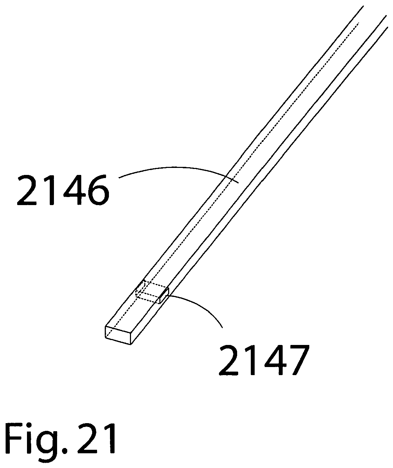

In Figur 21 ist ein Beispiel eines Positionierelements in Form eines Schiebers 2146 dargestellt, der dafür verwendet werden kann, ein Volumen 2147, das in dem Schieber ausgespart ist, an eine bestimmte Stelle in einem Probenträger zu schieben bzw. zu positionieren. Das Volumen 2147 kann insbesondere mit einem partikel- oder zellhaltigen Gel gefüllt werden, beispielsweise bevor der Schieber teilweise oder ganz in einen dafür vorgesehenen Kanal des Probenträgers eingebracht wird, um das Gel geeignet zu positionieren. Der Schieber 2146 kann aus einem einzigen Stück z.B. spritzgegossen sein, oder hergestellt werden, in dem man eine Folie auf ein rechteckiges Stäbchen aufbringt, das eine Aussparung in der Größe des Volumens 2147 hat.

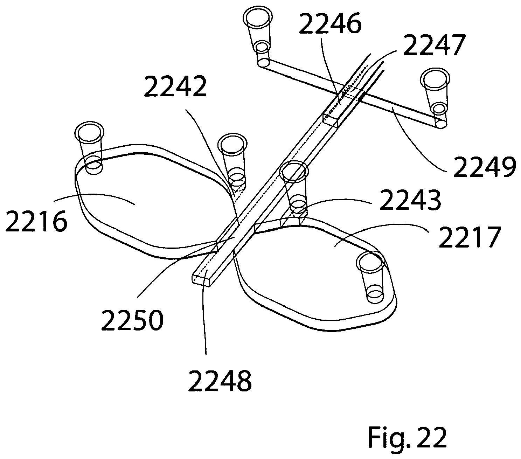

In Figur 22 ist ein Beispiel gezeigt, wie solch ein Schieber 2246 z.B. in eine Chemotaxisvorrichtung eingebracht werden kann. In der gezeigten Stellung kann der Schieber 2246, insbesondere das ausgesparte Volumen 2247, z.B. durch einen Querkanal 2249 mit zellhaltigem Gel befüllt werden. Mit Hilfe des Schiebers 2246 kann je nach gewünschtem Befüllprotokoll der Bereich zwischen den Reservoiren 2216 und 2217 verschlossen werden, indem man den Schieber im Kanal 2248 weiter vorschiebt, um die Reservoire 2216 und 2217 unabhängig voneinander, z.B. mit Hilfe der Anschlüsse 2242 und 2243, zu befüllen. Man kann die Reservoire 2216 und 2217 alternativ mit Gel oder mit einer newtonschen Flüssigkeit befüllen. Nachträglich kann in definierter Weise das in das Volumen 2247 eingefüllte Gel in den Beobachtungsbereich 2250 zwischen den Reservoiren 2216 und 2217 eingebracht werden.

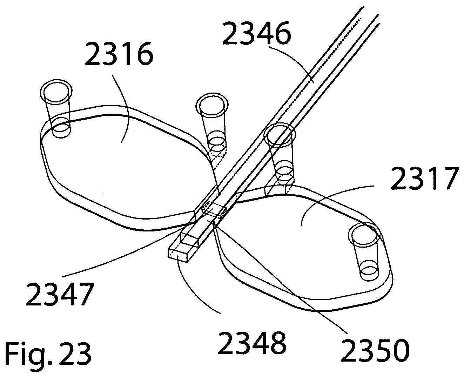

In Figur 23 ist beispielhaft ein Positionierelement in Form eines Schiebers 2346 gezeigt, der in einen Probenträger eingebracht wurde. Insbesondere ist der Schieber 2346 so im Kanal 2348 angeordnet, dass das in das Volumen 2347 eingefüllte Gel im Beobachtungsbereich 2350 zwischen den Reservoiren 2316 und 2317 angeordnet ist. Der Kanal 2348 kann gegenüber dem Schieber 2346 mit zähflüssigem Silikonöl, oder polymerisierbarem Silikon, wie z.B. PDMS (Polydimethylsiloxane), nach dem Verschieben abgedichtet werden. Alternativ kann man auch beispielsweise mit Hilfe von O-Ringen zwischen Kanal 2348 und Schieben 2346 abdichten.

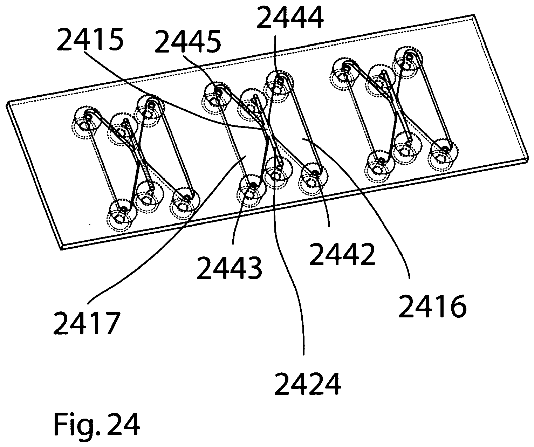

In Figur 24 ist ein weiteres Beispiel für einen Probenträger gezeigt. Insbesondere stellt dieser Probenträger eine weitere beispielhafte Struktur dar, mit der es möglich ist, einen definierten Raum mit Gel auszufüllen. Dazu befüllt man über den Kanal 2424 den Beobachtungsbereich 2415 mit z.B. Kollagen 1 Gel, in dem Zellen suspensiert sind, und lässt es polymerisieren. Dabei kann der Beobachtungsbereich 2415 derart dimensioniert sein, dass das eingebrachte Gel durch Kapillarkräfte im Beobachtungsbereich 2415 gehalten wird, d.h. nicht in die Reservoire 2416 und 2417 übertritt. Danach befüllt man das Reservoir 2416 über die Anschlüsse 2442 und 2444 und das Reservoir 2417 über die Anschlüsse 2443 und 2445 mit newtonschen Flüssigkeiten oder Gelen. Verschließt man danach die Reservoire 2416 und 2417 hermetisch, beispielsweise mit passenden konischen Steckern, baut sich im Bereich 2415 durch Diffusion ein Gradient auf, in welchem die Migration der Zellen beobachtet werden kann.

Es versteht sich, dass die in den zuvor beschriebenen Ausführungsbeispielen genannten Merkmale nicht auf diese speziellen Kombinationen beschränkt sind und auch in beliebigen anderen Kombinationen möglich sind. Insbesondere können unterschiedliche Probenträger mit unterschiedlichen Verfahrensschritten in unterschiedlicher Reihenfolge kombiniert werden.

## Patentansprüche

1. Ein Verfahren zum Positionieren einer Vielzahl von Zellen in einen gewünschten Teilbereich eines Probenträgers, wobei der Probenträger einen dreidimensionalen Raumbereich zum Anordnen der Zellen umfasst, wobei der dreidimensionale Raumbereich den gewünschten Teilbereich umfasst und der gewünschte Teilbereich in wenigstens einer horizontalen Richtung kleiner ist, als der dreidimensionale Raumbereich, umfassend die Schritte:
Anordnen eines Gels in einem Teilbereich des Probenträgers;
Polymerisieren oder Gelieren des Gels, wodurch ein polymerisiertes Gel erhalten wird, wobei das polymerisierte Gel den gewünschten Teilbereich wenigstens teilweise horizontal begrenzt; und
Einbringen der Vielzahl von Zellen in den Probenträger;
wobei das Anordnen des Gels ein Anordnen eines Positionierelements in einem Teilbereich des Probenträgers umfasst, wobei das Positionierelement nach dem Polymerisieren oder Gelieren des Gels entfernt wird;
wobei die Vielzahl von Zellen entweder mit dem Gel eingebracht wird, wobei das Positionierelement den gewünschten Teilbereich derart begrenzt, dass ein Ausbreiten des Gels und der Zellen aus dem gewünschten Teilbereich heraus verhindert wird,
oder
wobei das Gel ohne Zellen eingebracht wird, und wobei die Vielzahl von Zellen nach dem Entfernen des Positionierelements mit einem weiteren Gel in einen Bereich eingebracht wird, der zuvor von dem Positionierelement abgedeckt wurde.

2. Verfahren nach Anspruch 1, wobei der gewünschte Teilbereich vollständig durch das polymerisierte Gel oder durch das polymerisierte Gel und den Probenträger begrenzt wird.

## Claims

1. A method of positioning a plurality of cells in a desired partial region of a specimen carrier, wherein the specimen carrier comprises a three-dimensional spatial region for the arrangement of the cells, wherein the three-dimensional spatial region comprises the desired partial region and wherein the desired partial region is smaller in at least one horizontal direction than the three-dimensional spatial region, comprising the steps:
arrangement of a gel in a partial region of the specimen carrier;
polymerisation or gelification of the gel, by means of which a polymerised gel is obtained, wherein the polymerised gel horizontally borders at least partially the desired partial region; and
introduction of the plurality of cells into the specimen carrier;
wherein the arrangement of the gel comprises an arrangement of a positioning element in a partial region of the specimen carrier, wherein the positioning element is removed after polymerisation or gelification of the gel;
wherein the plurality of cells is either introduced with the gel, wherein the positioning element delimits the desired partial region such that an emission of the gel and the cells out of the desired partial region is prevented,
or
wherein the gel is introduced without cells, and wherein the plurality of cells is introduced after removal of the positioning element with a further gel into a region, which was covered by the positioning element before.

2. Method according to Claim 1, wherein the desired partial region is fully delimited by the polymerised gel or by the polymerised gel and the specimen carrier.

## Revendications

1. Un procédé pour positionner une pluralité de cellules dans une zone partielle souhaitée d'un porte-échantillon, le porte-échantillon comprenant une zone spatiale tridimensionnelle pour l'agencement des cellules, la zone spatiale tridimensionnelle englobant ladite zone partielle souhaitée, et la zone partielle souhaitée étant, dans au moins une direction horizontale, plus petite que la zone spatiale tridimensionnelle, le procédé comprenant les étapes suivantes
l'agencement d'un gel dans une zone partielle du porte-échantillon ;
la polymérisation ou gélification du gel, entraînant l'obtention d'un gel polymérisé, le gel polymérisé délimitant au moins partiellement horizontalement la zone partielle souhaitée ; et
l'introduction de la pluralité de cellules dans le porte-échantillon ;
procédé
d'après lequel l'agencement du gel comprend un agencement d'un élément de positionnement dans une zone partielle du porte-échantillon, l'élément de positionnement étant retiré après la polymérisation ou la gélification du gel ;
d'après lequel la pluralité de cellules sont introduites avec le gel, l'élément de positionnement délimitant la zone partielle souhaitée de manière à empêcher une dissémination du gel et des cellules hors de la zone partielle souhaitée,
ou bien
d'après lequel le gel est introduit sans cellules, et la pluralité de cellules est introduite avec un autre gel, après le retrait de l'élément de positionnement, dans une zone qui auparavant était recouverte par l'élément de positionnement.

2. Procédé selon la revendication 1, d'après lequel la zone partielle souhaitée est totalement délimitée par le gel polymérisé ou bien par le gel polymérisé et le porte-échantillon.
